(19) Europäisches Patentamt
European Patent Office
Office européen des brevets

(11) **EP 1 927 391 A1**

(12) **EUROPEAN PATENT APPLICATION**

(43) Date of publication:
**04.06.2008 Bulletin 2008/23**

(51) Int Cl.:
*B01D 53/94* (2006.01)          *B01J 35/04* (2006.01)
*C04B 38/00* (2006.01)          *F01N 3/022* (2006.01)
*F01N 3/28* (2006.01)

(21) Application number: **07018262.1**

(22) Date of filing: **18.09.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **16.11.2006 PCT/JP2006/322872**
**14.12.2006 PCT/JP2006/324981**

(71) Applicant: **IBIDEN CO., LTD.**
**Ogaki-shi**
**Gifu 503-8604 (JP)**

(72) Inventors:
• **Ohno, Kazushige**
**Ibi-gun**
**Gifu 501-0695 (JP)**
• **Kunieda, Masafumi**
**Ibi-gun**
**Gifu 501-0695 (JP)**
• **Ido, Takahiko**
**Ibi-gun**
**Gifu 501-0695 (JP)**

(74) Representative: **HOFFMANN EITLE**
**Patent- und Rechtsanwälte**
**Arabellastrasse 4**
**81925 München (DE)**

(54) **Method for manufacturing honeycomb structured body, and honeycomb structured body**

(57)     An object of the present invention is to provide a method for manufacturing a honeycomb structured body that can manufacture a honeycomb structured body having high strength and a large specific surface area, and the method for manufacturing a honeycomb structured body of the present invention is a method for manufacturing a honeycomb structured body comprising: a molding step of manufacturing a pillar-shaped honeycomb molded body having a large number of cells disposed in parallel with one another in a longitudinal direction with a cell wall therebetween by using a raw material composition comprising: inorganic particles; at least one of inorganic fibers and inorganic whiskers; and an inorganic binder; and a firing step of carrying out a firing treatment on said honeycomb molded body to manufacture a honeycomb fired body, wherein an average particle diameter of said inorganic binder in said raw material composition is 10 to 50 nm.

**EP 1 927 391 A1**

**Description**

TECHNICAL FIELD

The present invention relates to a method for manufacturing a honeycomb structured body, and a honeycomb structured body.

BACKGROUND ART

Conventionally, honeycomb catalysts formed by supporting catalyst components on a honeycomb structured body, which are used for converting exhaust gases of vehicles, are being manufactured by supporting materials having a large specific surface area such as activated alumina and a catalyst metal such as platinum on the surface of a cordierite-based honeycomb structured body having an integral structure and low thermal expansion. In addition, an alkaline earth metal such as barium (Ba) is supported on the honeycomb catalyst of this kind as a $NO\times$ adsorber in order to treat NOx in an atmosphere of excess oxygen like those in a lean burn engine and a diesel engine. Here, the more improvements in the performance of converting the exhaust gases require that the probability of contact of the exhaust gases with a catalyst noble metal and the NOx adsorber is increased. In order to do so, it is necessary that a carrier has a larger specific surface area, that a particle diameter of the noble metal is reduced, and that the noble metal particles are highly dispersed. And so, as a honeycomb structured body containing a material having a large specific surface area, for example, honeycomb structured bodies formed by extrusion-molding inorganic particles and inorganic fibers with an inorganic binder are known (for example, see Patent Documents 1 to 3).
Patent Document 1: JP-A 2005-218935
Patent Document 2: JP-A 2005-349378
Patent Document 3: JP-A 05-213681

DISCLOSURE OF THE INVENTION

PROBLEMS TO BE SOLVED BY THE INVENTION

However, in the honeycomb structured bodies disclosed in Patent Documents 1 to 3, there have been cases where a sufficient specific surface area and strength to be used as a catalyst supporting carrier can not be secured.
In addition, in the honeycomb structured body of this kind, there have been cases where, resulting from the insufficient specific surface area, the dispersibility of catalyst becomes low and a sufficient converting performance can not be enjoyed upon supporting the catalyst such as noble metals, and resulting from the insufficient strength, the honeycomb structured body is readily destroyed.

MEANS FOR SOLVING THE PROBLEMS

The present inventors made earnest investigations to solve the above-mentioned problems, and consequently found that by using an inorganic binder having a prescribed average particle diameter for a raw material composition, a honeycomb structured body having a large specific surface area while securing strength can be manufactured, thereby completing the present invention.
That is, a method for manufacturing a honeycomb structured body of the present invention is a method for manufacturing a honeycomb structured body, comprising: a molding step of manufacturing a pillar-shaped honeycomb molded body having a large number of cells disposed in parallel with one another in a longitudinal direction with a cell wall therebetween by using a raw material composition comprising: inorganic particles; at least one of inorganic fibers and inorganic whiskers; and an inorganic binder; and a firing step of carrying out a firing treatment on the honeycomb molded body to manufacture a honeycomb fired body, wherein an average particle diameter of the inorganic binder in the raw material composition is 10 to 50 nm.
In the method for manufacturing a honeycomb structured body, an average particle diameter of the inorganic binder is desirably 20 to 40 nm.
In addition, in the method for manufacturing a honeycomb structured body, the inorganic binder is desirably at least one kind selected from the group consisting of alumina sol, silica sol, titania sol, sepiolite and attapulgite.
A honeycomb structured body of the present invention is a honeycomb structured body manufactured by undergoing at least: a molding step of manufacturing a pillar-shaped honeycomb molded body having a large number of cells disposed in parallel with one another in a longitudinal direction with a cell wall therebetween by using a raw material composition comprising inorganic particles, at least one of inorganic fibers and inorganic whiskers, and an inorganic binder; and a firing step of carrying out a firing treatment on the honeycomb molded body to manufacture a honeycomb fired body, wherein an average particle diameter of the inorganic binder in the raw material composition is 10 to 50 nm.

In the honeycomb structured body, an average particle diameter of the inorganic binder is desirably 20 to 40 nm. In addition, in the honeycomb structured body, the inorganic binder is desirably at least one kind selected from the group consisting of alumina sol, silica sol, titania sol, sepiolite and attapulgite.

In addition, a catalyst is desirably supported on the honeycomb structured body, and the catalyst desirably contains at least one kind selected from the group consisting of noble metals, alkali metals, alkaline earth metals, and oxides.

Further, the honeycomb structured body is desirably used for converting exhaust gases of vehicles.

EFFECTS OF THE INVENTION

In the method for manufacturing a honeycomb structured body of the present invention, a honeycomb structured body having high strength and a large specific surface area can be manufactured since an inorganic binder having a prescribed average particle diameter is used.

In addition, the honeycomb structured body of the present invention has a large specific surface area and high strength, and can be suitably used as a catalyst supporting carrier.

BEST MODE FOR CARRYING OUT THE INVENTION

First, the method for manufacturing a honeycomb structured body of the present invention will be described. The method for manufacturing a honeycomb structured body of the present invention is a method for manufacturing a honeycomb structured body, comprising: a molding step of manufacturing a pillar-shaped honeycomb molded body having a large number of cells disposed in parallel with one another in a longitudinal direction with a cell wall therebetween by using a raw material composition comprising inorganic particles, at least one of inorganic fibers and inorganic whiskers, and an inorganic binder; and a firing step of carrying out a firing treatment on the honeycomb molded body to manufacture a honeycomb fired body, wherein an average particle diameter of the inorganic binder is 10 to 50 nm.

Hereinafter, the method for manufacturing a honeycomb structured body of the present invention will be described step by step.

(1) In the method for manufacturing a honeycomb structured body of the present invention, first, a molding step of manufacturing a pillar-shaped honeycomb molded body having a large number of cells disposed in parallel with one another in a longitudinal direction with a cell wall therebetween by using a raw material composition comprising inorganic particles, at least one of inorganic fibers and inorganic whiskers, and an inorganic binder, is carried out.

As the raw material composition, a substance comprising inorganic particles, at least one of inorganic fibers and inorganic whiskers, and an inorganic binder, and as needed, further containing an organic binder, a dispersion medium and a forming auxiliary, which are appropriately added according to the moldability of the raw material composition, can be used.

In the method for manufacturing a honeycomb structured body of the present invention, as the inorganic binder, an inorganic binder having a lower limit of an average particle diameter of 10 nm and an upper limit of 50 nm is used. By using such an inorganic binder, a honeycomb structured body having a large specific surface area and high strength can be manufactured by undergoing the manufacturing steps described later.

When an average particle diameter of the inorganic binder is less than 10 nm or more than 50 nm, the strength of the manufactured honeycomb structured body becomes insufficient. The reason for this is presumably described as follows. That is, in the method for manufacturing a honeycomb structured body of the present invention, presumably, the inorganic binder mainly plays a role of bonding the inorganic particles, the inorganic fibers and the inorganic whiskers, and the inorganic binder presumably exerts an adhesive function by interposing between the inorganic fibers (inorganic whiskers) and the inorganic particles to simultaneously come into contact with the inorganic fibers (inorganic whiskers) and the inorganic particles, or by interposing between each of the inorganic particles to simultaneously come into contact with the different inorganic particles.

Here, presumably, when the average particle diameter is less than 10 nm, it is difficult to simultaneously come into contact with the inorganic fibers (inorganic whiskers) and the inorganic particles or to simultaneously come into contact with the different inorganic particles, and therefore there are cases where a sufficient adhesive strength cannot be obtained, and on the other hand, when the average particle diameter is more than 50 nm, the number of points to be bonded decreases and consequently the strength becomes insufficient.

Furthermore, when an average particle diameter of the inorganic binder is more than 50 nm, the specific surface area of the manufactured honeycomb structured body is not increased sufficiently, and it is disadvantageous when the honeycomb structured body is used as a catalyst supporting carrier.

In addition, a desired average particle diameter of the inorganic binder is 20 nm in the lower limit and 40 nm in the upper limit.

As the inorganic binder, inorganic sols and clay binders can be used, and the specific examples of the inorganic sols include alumina sol, silica sol, titania sol and the like. The specific examples of the clay binders include clays having a double-chain structure such as white clay, kaolin, montmorillonite, sepiolite and attapulgite, and the like. These inorganic binders may be used alone or in combination of two or more kinds.

Among these binders, at least one kind selected from the group consisting of alumina sol, silica sol, titania sol, sepiolite and attapulgite is desirable.

A blending amount of the inorganic binder is, in terms of solid matter content, 5% by weight as a desirable lower limit, 10% by weight as a more desirable lower limit, and 15% by weight as a furthermore desirable lower limit to the total amount of: the inorganic particles; at least one of the inorganic fibers and inorganic whiskers; and the solid matter of the inorganic binder (hereinafter, referred to as the total amount of essential raw materials). On the other hand, the blending amount of the inorganic binder is 50% by weight as a desirable upper limit, 40% by weight as a more desirable upper limit, and 35% by weight as a furthermore desirable upper limit.

When the blending amount of the inorganic binder is less than 5% by weight, the strength of the manufactured honeycomb structured body may be deteriorated, and on the other hand, when the blending amount of the inorganic binder is more than 50% by weight, the moldability of the raw material composition tends to be deteriorated.

In addition, the average particle diameter of the inorganic binder can be measured, for example, by the following method.

Specifically, when the inorganic binder is silica sol, first, the silica sol is dried, and BET specific surface area thereof is measured.

Next, assumed that silica particles in the silica sol are dense spherical particles, the BET specific surface area is determined from the following equation (1):

$$\text{BET specific surface area} = (6000/\rho)/\text{particle diameter} \quad \cdots \quad (1)$$

(in the equation, $\rho$ is a true density (2.2 g/cm$^3$) of silica)

Further, the average particle diameter of the inorganic binder can be also directly measured by using, for example, TEM (transmission electron microscope).

Examples of the inorganic particles include particles of alumina, silica, zirconia, titania, ceria, mullite, zeolite and the like. These particles may be used alone or in combination of two or more kinds.

Among these particles, alumina particles and ceria particles are particularly desirable.

A blending amount of the inorganic particles is 30% by weight as a desirable lower limit to the total amount of essential raw materials, 40% by weight as a more desirable lower limit, and 50% by weight as a furthermore desirable lower limit.

On the other hand, the blending amount of the inorganic particles is 90% by weight as a desirable upper limit, 80% by weight as a more desirable upper limit, and 75% by weight as a furthermore desirable upper limit.

When the blending amount of the inorganic particles is less than 30% by weight, the specific surface area of the manufactured honeycomb structured body is reduced since the amount of the inorganic particles contributing to the increase of specific surface area is relatively decreased, and therefore it may become impossible to highly disperse a catalyst component upon supporting the catalyst component on a catalyst supporting carrier. On the other hand, when the blending amount of the inorganic particles is more than 90% by weight, the strength of the manufactured honeycomb structured body tends to be deteriorated since the amounts of the inorganic binder, the inorganic fibers and the inorganic whiskers, contributing to the improvement of the strength, are relatively decreased.

In addition, secondary particles of the inorganic particles mixed in the raw material composition desirably have an average particle diameter of 0.5 to 20 $\mu$m.

When the average particle diameter of the secondary particles is less than 0.5 $\mu$m, the manufactured honeycomb structured body is densified, and therefore the permeability of gases may be low upon using the honeycomb structured body as a catalyst supporting carrier, and on the other hand, when the average particle diameter of the secondary particles is more than 20 $\mu$m, the specific surface area of the manufactured honeycomb structured body tends to be reduced.

Incidentally, primary particles of the inorganic particles desirably have an average particle diameter of 5 to 100 nm.

In the present specification, the primary particles refer to particles forming a powder or agglomerate, and also refer to particles of a minimum unit existing without breaking a bond between molecules. In addition, the secondary particles refer to particles formed by the agglomeration of the primary particles.

In addition, the inorganic particles (secondary particles) desirably have a specific surface area of 50 to 300 $m^2/g$. The reason for this is that when the specific surface area is less than 50 $m^2/g$, the specific surface area of the manufactured honeycomb structured body tends to be reduced, and on the other hand, when the specific surface area is more than 300 $m^2/g$, the specific surface area of the honeycomb structured body is not increased so much even though the specific surface area of the inorganic particles (secondary particles) is increased.

In addition, in the method for manufacturing a honeycomb structured body of the present invention, the inorganic particles (secondary particles) desirably have an average aspect ratio of 1 to 5.

Examples of the inorganic fibers or inorganic whiskers include inorganic fibers and inorganic whiskers containing alumina, silica, silicon carbide, silica-alumina, glass, potassium titanate, aluminum borate, or the like.

These inorganic fibers or inorganic whiskers may be used alone or in combination of two or more kinds.

In addition, in the method for manufacturing a honeycomb structured body of the present invention, the inorganic fibers or the inorganic whiskers have an average aspect ratio of more than 5.

Further, an average aspect ratio of each of the inorganic fibers and inorganic whiskers is desirably 10 to 1000.

The total blending amount of at least one of the inorganic fibers and inorganic whiskers is 3% by weight as a desirable lower limit to the total amount of essential raw materials, 5% by weight as a more desirable lower limit, and 8% by weight as a furthermore desirable lower limit. On the other hand, the blending amount of at least one of the inorganic fibers and inorganic whiskers is 50% by weight as a desirable upper limit, 40% by weight as a more desirable upper limit, and 30% by weight as a furthermore desirable upper limit.

When the total blending amount of at least one of the inorganic fibers and inorganic whiskers is less than 3% by weight, the strength of the manufactured honeycomb structured body may be deteriorated, and on the other hand, when this total blending amount is more than 50% by weight, since the amount of the inorganic particles contributing to the increase of specific surface area is relatively decreased in the manufactured honeycomb structured body, the specific surface area of the honeycomb structured body may be reduced, and therefore it may become impossible to highly disperse a catalyst component upon supporting the catalyst component on a catalyst supporting carrier.

In the raw material composition, an organic binder, a dispersion medium, and a forming auxiliary may be mixed. The organic binder is not particularly limited, and examples of the binder include methyl cellulose, carboxymethyl cellulose, hydroxyethyl cellulose, polyethylene glycol, and the like.

These binders may be used alone or in combination of two or more kinds.

A blending amount of the organic binder is desirably 1 to 10 parts by weight to 100 parts by weight of the total solid matter of the inorganic particles, the inorganic fibers, the inorganic whiskers and the inorganic binder.

The dispersion medium is not particularly limited, and examples of the dispersion medium include water, organic solvents (benzene, and the like), alcohols (methanol, and the like) and the like.

The forming auxiliary is not particularly limited, and examples of the forming auxiliary include ethylene glycol, dextrin, fatty acid, fatty acid soap, polyalcohol and the like.

A method for preparing the raw material composition is not particularly limited, and it is preferred to mix and/or knead a raw material, and the raw material may be mixed with, for example, a mixer or an attritor, or may be kneaded well with a kneader.

Next, the raw material composition is extrusion-molded to manufacture a pillar-shaped honeycomb molded body having a large number of cells disposed in parallel with one another in a longitudinal direction with a cell wall therebetween.

(2) A drying step is carried out as needed on the honeycomb molded body.

The drying step can be carried out with, for example, a microwave drying apparatus, a hot-air drying apparatus, a dielectric drying apparatus, a reduced pressure drying apparatus, a vacuum drying apparatus, a freeze drying apparatus, and the like.

(3) A degreasing step is carried out, as needed, on the honeycomb molded body dried as needed.

In this case, degreasing conditions are not particularly limited and appropriately selected according to kinds and amounts of organic substances contained in the molded body, and about 400°C and 2 hours are desirable as these conditions.

(4) Next, a firing step of carrying out a firing treatment on the honeycomb molded body dried and degreased as needed to manufacture a honeycomb fired body is carried out.

A firing temperature in the firing treatment is not particularly limited, and a temperature of 500 to 1200°C is desirable, and a temperature of 600 to 1000°C is more desirable.

When the firing temperature is less than 500°C, an adhesive function of the inorganic binder is hard-to-develop and sintering of the inorganic particles is also hard-to-proceed, and therefore the strength of the manufactured honeycomb structured body may be deteriorated, and when it is more than 1200°C, the sintering of the inorganic particles proceeds excessively and the specific surface area per unit volume of the manufactured honeycomb structured body is reduced, and therefore it may become impossible to sufficiently highly disperse a catalyst component to be supported on a honeycomb structured body upon using the honeycomb structured body as a catalyst supporting carrier.

By undergoing these steps, a pillar-shaped honeycomb fired body having a large number of cells disposed in parallel with one another in a longitudinal direction with a cell wall therebetween can be manufactured.

The honeycomb fired body itself, manufactured by undergoing these steps, is a honeycomb structured body, and in the method for manufacturing a honeycomb structured body of the present invention, the overall steps can be terminated at the firing step.

Further, a sealing material layer (coat layer) is formed on the periphery of the honeycomb fired body manufactured by the above-mentioned manufacturing method, and the resulting honeycomb fired body may be used as a finished product of the honeycomb structured body. The honeycomb structured body comprising one honeycomb fired body is also referred to as an integral honeycomb structured body in the following.

Here, a method for forming the sealing material layer (coat layer) is similar to a method for forming a sealing material layer (coat layer) on the periphery of a honeycomb block upon manufacturing the honeycomb structured body by binding a plurality of the honeycomb fired bodies together to form the honeycomb block as described later.

Further, in the method for manufacturing a honeycomb structured body of the present invention, the honeycomb structured body may be manufactured by the above-mentioned method, and then binding a plurality of these honeycomb fired bodies together to form the honeycomb block.

In this case, the following method may be used.

Hereinafter, the honeycomb structured body formed by binding a plurality of the honeycomb fired bodies together is also referred to as an aggregated honeycomb structured body.

That is, a sealing material paste to become a sealing material layer (adhesive layer) is applied to the obtained honeycomb fired body to bind the honeycomb fired body in sequence, and thereafter the sealing material paste is dried and solidified to manufacture an aggregate of the honeycomb fired bodies having a prescribed size bound by interposing the sealing material layer (adhesive layer).

In addition, a prescribed number of the honeycomb fired bodies are piled up by interposing a spacer, and then a sealing material paste is filled into a gap between the honeycomb fired bodies, and thereafter the sealing material paste is dried and solidified to manufacture an aggregate of the honeycomb fired bodies having a prescribed size bound by interposing the sealing material layer (adhesive layer).

The sealing material paste for forming an adhesive layer is not particularly limited, and for example, a mixture of an inorganic binder and ceramic particles, a mixture of an inorganic binder and inorganic fibers, or a mixture of an inorganic binder, ceramic particles and inorganic fibers can be used.

In addition, an organic binder may be added to these sealing material pastes.

The organic binder is not particularly limited, and examples of the binder include polyvinyl alcohol, methyl cellulose, ethyl cellulose, carboxymethyl cellulose and the like.

These binders may be used alone or in combination of two or more kinds.

A thickness of the sealing material layer (adhesive layer) is desirably 0.5 to 5 mm.

When the thickness of the sealing material layer (adhesive layer) is less than 0.5 mm, sufficient adhesive strength may not be obtained, and when the thickness of the sealing material layer (adhesive layer) is more than 5 mm, since the sealing material layer (adhesive layer) is a portion not functioning as a catalyst supporting carrier, the specific surface area per unit volume of the honeycomb structured body is reduced, and therefore it may become impossible to sufficiently highly disperse a catalyst component upon supporting the catalyst component on a catalyst supporting carrier.

Further, when the thickness of the sealing material layer (adhesive layer) is more than 5 mm, pressure loss may become high.

Here, the number of the honeycomb fired bodies to be bound may be appropriately determined according to the size of the honeycomb structured body. In addition, an aggregate of the honeycomb fired bodies formed by binding the honeycomb fired bodies together by interposing the sealing material layer (adhesive layer) is appropriately cut and polished as needed to form a honeycomb block.

Next, a sealing material layer (coat layer) is formed by applying a sealing material paste for forming a coat layer onto the periphery of the honeycomb block as needed, and drying and solidifying the sealing material paste.

By forming the sealing material layer (coat layer), the periphery of the honeycomb block can be protected, and consequently the strength of the honeycomb structured body can be improved.

The sealing material paste for forming the coat layer is not particularly limited, and it may be made from the same materials as of the sealing material paste for forming the adhesive layer, or may be made from the different materials from those of the sealing material paste for forming the adhesive layer.

In addition, when the sealing material paste for forming the coat layer is made from the same materials as of the sealing material paste for forming the adhesive layer, blending ratios of the composition of both the sealing material pastes may be the same as or different from each other.

A thickness of the sealing material layer (coat layer) is not particularly limited, and this thickness is desirably 0.1 to 2 mm. When the thickness is less than 0.1 mm, there may be a possibility that the periphery cannot be protected fully and the strength cannot be improved, and when the thickness is more than 2 mm, the specific surface area per unit volume of the honeycomb structured body may be reduced, and therefore it may become impossible to sufficiently highly disperse a catalyst component upon supporting the catalyst component on a catalyst supporting carrier.

In addition, in the method for manufacturing a honeycomb structured body of the present invention, it is preferred to calcine the honeycomb fired bodies after binding a plurality of the honeycomb fired bodies together by interposing the sealing material layer (adhesive layer) (however, when a sealing material layer (coat layer) is provided, calcine them after forming the coat layer).

The reason for this is that when an organic binder is contained in the sealing material layer (adhesive layer) and the sealing material layer (coat layer), the organic binder can be degreased and removed by calcination.

The conditions of the calcination are appropriately determined according to kinds and amounts of organic substances contained, and about 700°C and 2 hours are desirable as these conditions.

Next, the honeycomb structured body of the present invention will be described.

The honeycomb structured body of the present invention is manufactured by undergoing at least: a molding step of manufacturing a pillar-shaped honeycomb molded body having a large number of cells disposed in parallel with one another in a longitudinal direction with a cell wall therebetween by using a raw material composition comprising inorganic particles, at least one of inorganic fibers and inorganic whiskers, and an inorganic binder; and a firing step of carrying out a firing treatment on the honeycomb molded body to manufacture a honeycomb fired body, wherein an average particle diameter of the inorganic binder in the raw material composition is 10 to 50 nm.

In addition, in the present specification, a pillar shape includes arbitrary pillar shapes such as a round pillar shape, a cylindroid shape, and a polygonal pillar shape.

The honeycomb structured body of the present invention is a honeycomb structured body manufactured by undergoing at least the molding step and the firing step, wherein an average particle diameter of the inorganic binder used in the molding step is 10 to 50 nm.

Accordingly, the honeycomb structured body of the present invention can be manufactured by use of the above-mentioned method for manufacturing a honeycomb structured body of the present invention.

Hereinafter, the configuration of the honeycomb structured body of the present invention will be described referring to drawings.

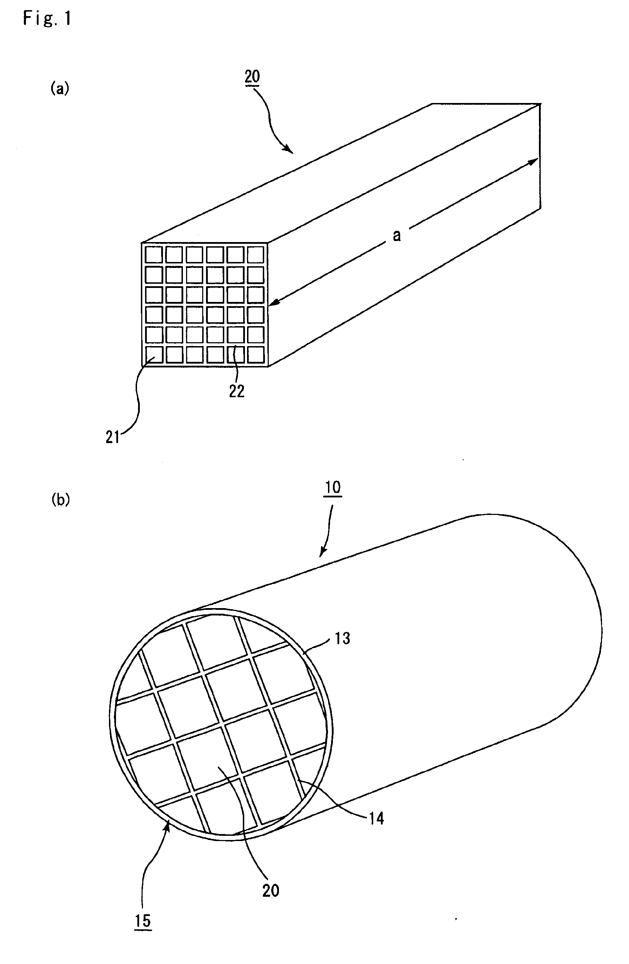

Fig. 1(a) is a perspective view schematically showing one example of a honeycomb fired body (one example of a honeycomb structured body) manufactured by undergoing a firing step, and Fig. 1(b) is a perspective view schematically showing another example of a honeycomb structured body of the present invention formed by using the honeycomb fired body shown in Fig. 1(a).

As shown in Fig. 1(a), a honeycomb fired body 20 has a square pillar shape, and has a large number of cells 21 disposed in parallel with one another in a longitudinal direction (the direction shown by an arrow a in Fig. 1(a)) with a cell wall 22 therebetween.

As shown in Fig. 1(b), in a honeycomb structured body 10 of the present invention, a plurality of the honeycomb fired bodies 20 shown in Fig. 1 (a) are bound together by interposing a sealing material layer (adhesive layer) 14 to configure a ceramic block 15, and a sealing material layer (coat layer) 13 is formed on the periphery thereof.

In the honeycomb fired body, a thickness of the cell wall is not particularly limited, and the thickness of the cell wall has a desirable lower limit of 0.05 mm, a more desirable lower limit of 0.10 mm, and a particularly desirable lower limit of 0.15 mm. On the other hand, the thickness of the cell wall has a desirable upper limit of 0.35 mm, a more desirable upper limit of 0.30 mm, and a particularly desirable upper limit of 0.25 mm.

When the thickness of the cell wall is less than 0.05 mm, the strength of the honeycomb fired body may be deteriorated, and on the other hand, when the thickness of the cell wall is more than 0.35 mm, the performance of converting the exhaust gases may be deteriorated since a contacting area with the exhaust gases is reduced, and the gases do not permeate deeply into a catalyst supporting carrier and therefore the catalyst supported on the inner surface in the cell wall hardly comes into contact with the gases upon using the honeycomb structured body as a catalyst supporting carrier for converting the exhaust gases.

In addition, a cell density of the honeycomb fired body has a desirable lower limit of 15.5 pcs/cm$^2$ (100 cpsi), a more desirable lower limit of 46.5 pcs/cm$^2$ (300 cpsi), and a furthermore desirable lower limit of 62 pcs/cm$^2$ (400 cpsi). On the other hand, the cell density has a desirable upper limit of 186 pcs/cm$^2$ (1200 cpsi), a more desirable upper limit of 170.5 pcs/cm$^2$ (1100 cpsi), and a furthermore desirable upper limit of 155 pcs/cm$^2$ (1000 cpsi).

When the cell density is less than 15.5 pcs/cm$^2$, an area of the cell wall contacting the exhaust gases within the honeycomb fired body may be reduced upon using the honeycomb structured body as a catalyst supporting carrier for converting the exhaust gases, and when the cell density is more than 186 pcs/cm$^2$, pressure loss may become high and also manufacturing of the honeycomb fired body may become difficult.

In addition, desirably, a cross-sectional area of the honeycomb fired body in the direction perpendicular to the longitudinal direction of the honeycomb fired body has a lower limit of 5 cm$^2$ and an upper limit of 50 cm$^2$, and particularly when the honeycomb structured body is formed by binding a plurality of the honeycomb fired bodies together, the cross-sectional area is desirably within the above-mentioned range.

When the cross-sectional area is less than 5 cm$^2$, since an area of the sealing material layer (adhesive layer), with which a plurality of the honeycomb fired bodies are bound, is relatively increased in a cross section perpendicular to the longitudinal direction of the honeycomb structured body, an area on which a catalyst can be supported may be relatively reduced upon using the honeycomb structured body as a catalyst supporting carrier. On the other hand, when the cross-sectional area is more than 50 cm$^2$, it may become impossible to sufficiently suppress thermal stress generated in the honeycomb fired body since the honeycomb fired body is large.

The cross-sectional area has a more desirable lower limit of 6 cm$^2$, and a particularly desirable lower limit of 8 cm$^2$, and a more desirable upper limit of 40 cm$^2$, and a particularly desirable upper limit of 30 cm$^2$.

A shape of a cross section perpendicular to the longitudinal direction of a cell formed in the honeycomb fired body is not particularly limited, and an approximate triangle or an approximate hexagon may be used other than a rectangle like the honeycomb fired body shown in Fig. 1 (a).

Further, when the sealing material layer (adhesive layer) and the sealing material layer (coat layer) are formed in the honeycomb structured body, desirably, a ratio of the total cross-sectional area of the honeycomb fired bodies to the cross-sectional area of the honeycomb structured body is 90% or more in a cross section perpendicular to the longitudinal direction of the honeycomb structured body. The reason for this is that when this ratio is less than 90%, the specific surface area of the honeycomb structured body is reduced.

In addition, desirably, the specific surface area per unit area of the honeycomb structured body of the present invention is 25000 m$^2$/L(litter) or more.

The reason for this is that when the specific surface area is within the above range, it becomes easy to sufficiently broadly support and disperse a catalyst on the whole honeycomb structured body.

Incidentally, a desirable upper limit of the specific surface area is 70000 m$^2$/L in consideration of the limit of dispersion of the catalyst (for example, platinum).

It is more desirable that a bending strength of the honeycomb structured body is higher, and specifically, it is desirable that the bending strength is 3.0 MPa or more when the honeycomb fired body has a rectangular pillar shape of 37 mm × 37 mm × 75 mm.

The reason for this is that a possibility of destruction of the honeycomb structured body due to thermal stress and the like generated upon using the honeycomb structured body becomes less.

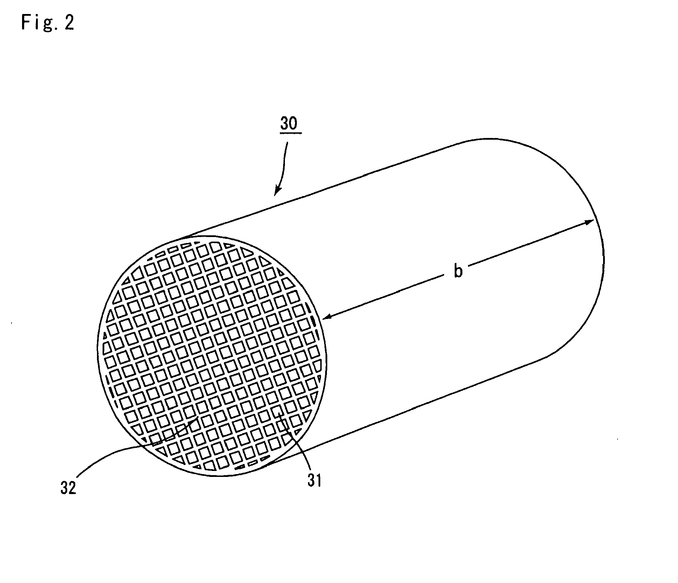

In addition, the honeycomb structured body of the present invention is not limited to an aggregated honeycomb structured body as shown in Fig. 1(b), and it may be an integral honeycomb structured body as shown in Fig. 2.

Fig. 2 is a perspective view schematically showing another example of the honeycomb structured body of the present invention.

A honeycomb structured body 30 shown in Fig. 2 is formed by a honeycomb fired body having a pillar shape, and having a large number of cells 31 (in the direction shown by an arrow b in Fig. 2) disposed in parallel with one another in a longitudinal direction with a cell wall 32 therebetween.

Further, in the integral honeycomb structured body of this kind, a sealing material layer (coat layer) may be formed on the periphery of the honeycomb fired body.

A catalyst is desirably supported on the honeycomb structured body of the present invention having such a configuration. The reason for this is that the honeycomb structured body of the present invention can be suitably used as a catalyst supporting carrier.

The catalyst is not particularly limited, and examples of the catalyst include noble metals, alkali metals, alkaline earth metals, oxides and the like. These may be used alone or in combination of two or more kinds.

Examples of the noble metals include platinum, palladium, rhodium and the like, examples of the alkali metals include potassium, sodium and the like, examples of the alkaline earth metals include barium and the like, and examples of the oxides include perovskite (La$_{0.75}$K$_{0.25}$MnO$_3$ and the like), CeO$_2$ and the like.

The applications of the honeycomb structured body on which a catalyst is supported as described above is not particularly limited, and the honeycomb structured body can be used for, for example, the so-called three-way catalyst for converting the exhaust gases of automobiles or a NOx adsorbing catalyst.

Incidentally, a timing of supporting a catalyst is not particularly limited, and the catalyst may be supported after manufacturing the honeycomb structured body, or may be supported on inorganic particles in the raw material composition.

Further, a method for supporting a catalyst is not particularly limited, and the catalyst can be supported, for example, by an impregnation method.

Here, the honeycomb structured body of the present invention has been described with examples mainly using the honeycomb structured body as a catalyst supporting carrier, but the honeycomb structured body can be used for other purposes besides a catalyst supporting carrier, and it can be used for adsorbents which adsorb gas components or liquid components, for example.

EXAMPLES

Hereinafter, the present invention will be described in more detail by way of Examples, but the present invention is not limited to these Examples.

(Example 1)

(1) 2250 g of γ alumina particles (an average particle diameter of secondary particles is 2 μm) as inorganic particles, 680 g of aluminum borate whiskers (fiber diameters are 0.5 to 1μ m, fiber lengths are 10 to 30 μm) as inorganic fibers, and 2600 g of silica sol (an average particle diameter is 30 nm, solid concentration is 30% by weight) as an inorganic binder were mixed, and further to the resulting mixture, 320 g of methyl cellulose as an organic binder, 290 g of UNILUB (manufactured by NOF Corp.) as a lubricant, and 225 g of glycerin (manufactured by NOF Corp.) as a plasticizer were added, and the resulting mixture was further mixed and kneaded to prepare a raw material composition. Next, this raw material composition was extrusion-molded with an extrusion-molding machine to manufacture a honeycomb molded body.

(2) Next, the honeycomb molded body was dried well with a microwave drying apparatus and a hot-air drying apparatus, and further kept at 400°C for 2 hours to be degreased.

Thereafter, a firing treatment was carried out on the honeycomb molded body while keeping the honeycomb molded body at 900°C for 2 hours to manufacture a honeycomb fired body having a rectangular pillar shape (37 mm × 37 mm × 75 mm), a cell density of 93 pcs/cm$^2$ (600 cpsi), a thickness of a cell wall of 0.2 mm, with a cross-sectional shape of the cells formed into a rectangular (square) shape.

(Examples 2 to 5)

Honeycomb fired bodies were manufactured by following the same procedure as in Example 1 except for using silica sol (solid concentration is 30% by weight) having average particle diameters shown in Table 1 as an inorganic binder used upon preparing a raw material composition.

(Example 6)

A honeycomb fired body was manufactured by following the same procedure as in Example 1 except for using mixed particles of 50% by.weight of γ alumina particles (an average particle diameter of secondary particles is 2 μm) and 50% by weight of β zeolite particles (an average particle diameter of secondary particles is 2 μm) in place of the γ alumina particles as inorganic particles.

(Examples 7 to 10)

Honeycomb fired bodies were manufactured by following the same procedure as in Example 6 except for using silica sol (solid concentration is 30% by weight) having average particle diameters shown in Table 1 as an inorganic binder used upon preparing a raw material composition.

(Example 11)

A honeycomb fired body was manufactured by following the same procedure as in Example 1 except for using mixed particles of 50% by weight of γ alumina particles (an average particle diameter of secondary particles is 2 μm) and 50% by weight of $CeO_2$ particles (an average particle diameter of secondary particles is 2 μm) in place of the γ alumina particles as inorganic particles.

(Examples 12 to 15)

Honeycomb fired bodies were manufactured by following the same procedure as in Example 11 except for using silica sol (solid concentration is 30% by weight) having average particle diameters shown in Table 1 as an inorganic binder used upon preparing a raw material composition.

(Comparative Examples 1, 2)

Honeycomb fired bodies were manufactured by following the same procedure as in Example 1 except for using silica sol (solid concentration is 30% by weight) having average particle diameters shown in Table 1 as an inorganic binder used upon preparing a raw material composition.

(Comparative Examples 3, 4)

Honeycomb fired bodies were manufactured by following the same procedure as in Example 6 except for using silica sol (solid concentration is 30% by weight) having average particle diameters shown in Table 1 as an inorganic binder used upon preparing a raw material composition.

(Comparative Examples 5, 6)

Honeycomb fired bodies were manufactured by following the same procedure as in Example 11 except for using silica sol (solid concentration is 30% by weight) having average particle diameters shown in Table 1 as an inorganic binder used upon preparing a raw material composition.

Evaluation of honeycomb fired bodies

On the honeycomb fired bodies manufactured in Examples and Comparative Examples, bending strength and specific surface area were measured according to the following methods. The results are shown in Table 1.

(Measurement of bending strength)

A three-point bending test was carried out in the conditions of a bending span distance of 50 mm and a bending speed of 0.5 mm/min by using INSTRON 5582, referring to JIS R 1601 to measure the bending strength of the honeycomb fired bodies of Examples and Comparative Examples.
The results are shown in Table 1.

(Specific surface area)

First, a BET specific surface area A ($m^2$/g) per unit weight of each of the honeycomb fired bodies was measured. The BET specific surface area was measured by one-point method with $N_2$ gas according to JIS R 1626 (1996) stipulated in the Japanese Industrial Standards by using a BET measuring apparatus (Micromeritics FlowSorb II-2300, manufactured by Shimadzu Corp.). A sample cut out into a cylindrical small piece (15 mm in diameter $\times$ 15 mm in height) was used for measurement.
Next, an apparent density B (g/L) of each of the honeycomb fired bodies was calculated from a weight and a volume of the outside shape of each of the honeycomb fired bodies, and the specific surface area S ($m^2$/L) of each of the honeycomb fired bodies was determined from the following equation (2). The results are shown in Table 1.

$$S\ (m^2/L)\ =\ A\ \times\ B\ \cdots(2)$$

Incidentally, this specific surface area of each of the honeycomb fired bodies refers to a specific surface area per an apparent volume of each of the honeycomb fired bodies.
[Table 1]

| | Inorganic particles | Average particle diameter of inorganic binder (nm) | Bending strength (MPa) | Specific surface area (m$^2$/L |
|---|---|---|---|---|
| Example 1 | $\gamma$ alumina | 30 | 5.8 | 43800 |
| Example 2 | $\gamma$ alumina | 10 | 4.2 | 45200 |
| Example 3 | $\gamma$ alumina | 20 | 5.3 | 44600 |
| Example 4 | $\gamma$ alumina | 40 | 5.4 | 43200 |
| Example 5 | $\gamma$ alumina | 50 | 4.0 | 42500 |
| Example 6 | $\gamma$ alumina + $\beta$ zeolite | 30 | 5.4 | 40400 |
| Example 7 | $\gamma$ alumina + $\beta$ zeolite | 10 | 4.0 | 41700 |
| Example 8 | $\gamma$ alumina + $\beta$ zeolite | 20 | 4.9 | 41400 |
| Example 9 | $\gamma$ alumina + $\beta$ zeolite | 40 | 5.0 | 39900 |
| Example 10 | $\gamma$ alumina + $\beta$ zeolite | 50 | 3.9 | 39200 |
| Example 11 | $\gamma$ alumina + $CeO_2$ | 30 | 5.2 | 41200 |
| Example 12 | $\gamma$ alumina + $CeO_2$ | 10 | 3.9 | 42300 |
| Example 13 | $\gamma$ alumina + $CeO_2$ | 20 | 4.8 | 41600 |
| Example 14 | $\gamma$ alumina + $CeO_2$ | 40 | 4.8 | 40500 |
| Example 15 | $\gamma$ alumina + $CeO_2$ | 50 | 3.8 | 40000 |
| Comparative Example 1 | $\gamma$ alumina | 5 | 0.8 | 45400 |
| Comparative Example 2 | $\gamma$ alumina | 60 | 1.9 | 38500 |
| Comparative Example 3 | $\gamma$ alumina + $\beta$ zeolite | 5 | 0.7 | 41900 |
| Comparative Example 4 | $\gamma$ alumina + $\beta$ zeolite | 60 | 1.6 | 35700 |
| Comparative Example 5 | $\gamma$ alumina + $CeO_2$ | 5 | 0.7 | 42400 |
| Comparative Example 6 | $\gamma$ alumina + $CeO_2$ | 60 | 1.5 | 36100 |

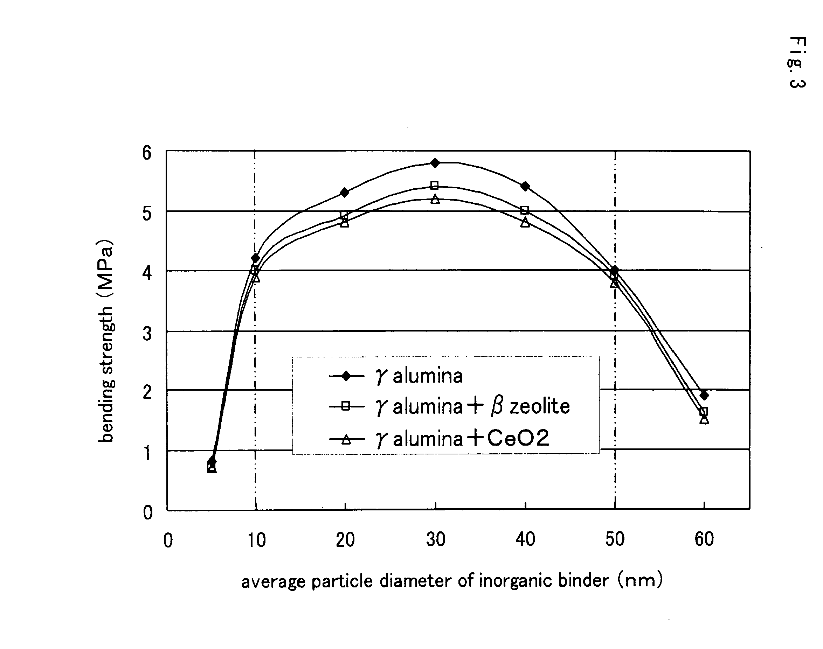

As is apparent from the results shown in Table 1 and Fig. 3, it became evident that by using the inorganic binder having an average particle diameter of 50 nm or less, a honeycomb fired body (honeycomb structured body) having a large specific surface area can be manufactured, and by using the inorganic binder having an average particle diameter of 10 to 50 nm, a honeycomb fired body (honeycomb structured body) having high strength can be manufactured. Incidentally, Fig. 3 is a graph showing a relationship between an average particle diameter of the inorganic binder and bending strength of each of the honeycomb fired bodies manufactured in Examples and Comparative Examples.

In addition, in Examples and Comparative Examples described above, one honeycomb fired body was manufactured and this honeycomb fired body was evaluated as a honeycomb structured body, but in the case where an aggregated honeycomb structured body as shown in Figs. 1 (a) and 1 (b) is manufactured by using a plurality of the honeycomb fired bodies, similar results are presumably obtained.

BRIEF DESCRIPTION OF THE DRAWINGS

Fig. 1(a) is a perspective view schematically showing one example of a honeycomb fired body manufactured by undergoing a firing step, and Fig. 1(b) is a perspective view schematically showing one example of a honeycomb structured body of the present invention formed by using the honeycomb fired body shown in Fig. 1(a).

Fig. 2 is a perspective view schematically showing another example of the honeycomb structured body of the present invention.

Fig. 3 is a graph showing a relationship between an average particle diameter of an inorganic binder and bending strength of each of honeycomb fired bodies manufactured in Examples and Comparative Examples.

EXPLANATION OF SYMBOLS

| | |
|---|---|
| 10, 30 | Honeycomb structured body |
| 13 | Sealing material layer (coat layer) |
| 14 | Sealing material layer (adhesive layer) |
| 20 | Honeycomb fired body |
| 21, 31 | Cell |
| 22, 32 | Cell wall |

**Claims**

1. A method for manufacturing a honeycomb structured body, comprising:

   a molding step of manufacturing a pillar-shaped honeycomb molded body having a large number of cells disposed in parallel with one another in a longitudinal direction with a cell wall therebetween by using a raw material composition comprising:

   inorganic particles;
   at least one of inorganic fibers and inorganic whiskers; and
   an inorganic binder; and

   a firing step of carrying out a firing treatment on said honeycomb molded body to manufacture a honeycomb fired body,

   wherein
   an average particle diameter of said inorganic binder in said raw material composition is 10 to 50 nm.

2. The method for manufacturing a honeycomb structured body according to claim 1,
   wherein
   an average particle diameter of said inorganic binder is 20 to 40 nm.

3. The method for manufacturing a honeycomb structured body according to claim 1 or 2,
   wherein
   said inorganic binder is at least one kind selected from the group consisting of alumina sol, silica sol, titania sol, sepiolite and attapulgite.

4. A honeycomb structured body obtainable by undergoing at least:

   a molding step of manufacturing a pillar-shaped honeycomb molded body having a large number of cells disposed in parallel with one another in a longitudinal direction with a cell wall therebetween by using a raw material composition comprising:

   inorganic particles

at least one of inorganic fibers and inorganic whiskers; and
an inorganic binder; and

a firing step of carrying out a firing treatment on said honeycomb molded body to manufacture a honeycomb fired body,

wherein
an average particle diameter of said inorganic binder in said raw material composition is 10 to 50 nm.

5. The honeycomb structured body according to claim 4,
wherein
an average particle diameter of said inorganic binder is 20 to 40 nm.

6. The honeycomb structured body according to claim 4 or 5,
wherein
said inorganic binder is at least one kind selected from the group consisting of alumina sol, silica sol, titania sol, sepiolite and attapulgite.

7. The honeycomb structured body according to any of claims 4 to 6,
wherein
a catalyst is supported on said honeycomb structured body.

8. The honeycomb structured body according to claim 7,
wherein
said catalyst contains at least one kind selected from the group consisting of noble metals, alkali metals, alkaline earth metals, and oxides.

9. The honeycomb structured body according to any of claims 4 to 8,
wherein
said honeycomb structured body is used for converting exhaust gases of vehicles.

Fig. 1

(a)

(b)

Fig. 2

Fig. 3

## EUROPEAN SEARCH REPORT

European Patent
Office

| Application Number |
| --- |
| EP 07 01 8262 |

### DOCUMENTS CONSIDERED TO BE RELEVANT

| Category | Citation of document with indication, where appropriate, of relevant passages | Relevant to claim | CLASSIFICATION OF THE APPLICATION (IPC) |
| --- | --- | --- | --- |
| E | EP 1 852 184 A (IBIDEN CO LTD [JP]) 7 November 2007 (2007-11-07) * paragraphs [0045] - [0064], [0072], [0084], [0085] * * table 1 * | 1-9 | INV. B01D53/94 B01J35/04 C04B38/00 F01N3/022 F01N3/28 |
| X | & WO 2006/070540 A (IBIDEN CO LTD [JP]; KUNIEDA MASAFUMI [JP]) 6 July 2006 (2006-07-06) | 1-9 | |
| Y | * the whole document * | 1-9 | |
| Y | US 2006/172886 A1 (SHIMAZU TAKASHI [JP] ET AL) 3 August 2006 (2006-08-03) * paragraph [0063] * | 1-9 | |
| P,X | EP 1 736 222 A (IBIDEN CO LTD [JP]) 27 December 2006 (2006-12-27) * paragraphs [0056], [0062], [0083], [0085], [0090], [0100] - [0102] * | 1-9 | |
| D,X | WO 2005/075075 A (IBIDEN CO LTD [JP]; OHNO KAZUSHIGE [JP]; KUNIEDA MASAFUMI [JP]; OGYU K) 18 August 2005 (2005-08-18) * example 1 * | 1-9 | TECHNICAL FIELDS SEARCHED (IPC) B01D B01J C04B F01N |
| D,X | EP 1 717 218 A (IBIDEN CO LTD [JP]) 2 November 2006 (2006-11-02) * paragraph [0083] * | 1-9 | |
| P,X | EP 1 736 459 A (IBIDEN CO LTD [JP]) 27 December 2006 (2006-12-27) * paragraph [0083] * | 1-9 | |
| X | EP 1 555 254 A (NGK INSULATORS LTD [JP]) 20 July 2005 (2005-07-20) * paragraph [0032] - paragraph [0035] * | 1-9 | |

The present search report has been drawn up for all claims

| Place of search | Date of completion of the search | Examiner |
| --- | --- | --- |
| Munich | 13 November 2007 | Gosselin, Daniel |

EPO FORM 1503 03.82 (P04C01)

**ANNEX TO THE EUROPEAN SEARCH REPORT
ON EUROPEAN PATENT APPLICATION NO.**

EP 07 01 8262

This annex lists the patent family members relating to the patent documents cited in the above-mentioned European search report.
The members are as contained in the European Patent Office EDP file on
The European Patent Office is in no way liable for these particulars which are merely given for the purpose of information.

13-11-2007

| Patent document cited in search report | | Publication date | Patent family member(s) | | Publication date |
|---|---|---|---|---|---|
| EP 1852184 | A | 07-11-2007 | CN | 1929923 A | 14-03-2007 |
| | | | WO | 2006070540 A1 | 06-07-2006 |
| | | | US | 2006292393 A1 | 28-12-2006 |
| WO 2006070540 | A | 06-07-2006 | CN | 1929923 A | 14-03-2007 |
| | | | EP | 1852184 A1 | 07-11-2007 |
| | | | US | 2006292393 A1 | 28-12-2006 |
| US 2006172886 | A1 | 03-08-2006 | NONE | | |
| EP 1736222 | A | 27-12-2006 | CN | 1997452 A | 11-07-2007 |
| | | | WO | 2006137161 A1 | 28-12-2006 |
| | | | US | 2006292339 A1 | 28-12-2006 |
| WO 2005075075 | A | 18-08-2005 | EP | 1713584 A1 | 25-10-2006 |
| | | | JP | 2005218935 A | 18-08-2005 |
| | | | KR | 20060008279 A | 26-01-2006 |
| | | | US | 2005227869 A1 | 13-10-2005 |
| EP 1717218 | A | 02-11-2006 | WO | 2005063653 A1 | 14-07-2005 |
| | | | JP | 2005349378 A | 22-12-2005 |
| | | | KR | 20060024330 A | 16-03-2006 |
| | | | US | 2005266992 A1 | 01-12-2005 |
| EP 1736459 | A | 27-12-2006 | CN | 1883792 A | 27-12-2006 |
| | | | WO | 2006137150 A1 | 28-12-2006 |
| | | | KR | 20060135492 A | 29-12-2006 |
| | | | US | 2006292331 A1 | 28-12-2006 |
| EP 1555254 | A | 20-07-2005 | AU | 2003273066 A1 | 13-05-2004 |
| | | | WO | 2004037745 A1 | 06-05-2004 |
| | | | JP | 2004142978 A | 20-05-2004 |
| | | | KR | 20050073567 A | 14-07-2005 |
| | | | US | 2006003143 A1 | 05-01-2006 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005218935 A
- JP 2005349378 A
- JP 5213681 A